# EUROPÄISCHE PATENTSCHRIFT

(11) **EP 0 460 449 B1**
(45) Veröffentlichungstag und Bekanntmachung des Hinweises auf die Patenterteilung: **13.04.1994**
(21) Anmeldenummer: 91108166.9
(22) Anmeldetag: 21.05.1991
(51) Int. Cl.: F02K 9/34

(54) **Raketenmotor**
Rocket engine
Moteur-fusée

(30) Priorität: 08.06.1990 DE 4018331
(43) Veröffentlichungstag der Anmeldung: 11.12.1991
(73) Patentinhaber: Dynamit Nobel Aktiengesellschaft, 53839 Troisdorf (DE)
(72) Erfinder: de la Haye, Johannes, W-5067 Kürten 2 (DE)

(56) Entgegenhaltungen:
- EP-A- 0 208 564
- EP-A- 0 403 858
- DE-A- 2 919 966

## Beschreibung

Die Erfindung richtet sich auf einen Raketenmotor mit einem zylinderähnlichen Gehäuse als Behälter für einen Feststofftreibsatz und wenigstens einer Düse im Bodenbereich.

Bei Feststoffraketen, wie sie beispielsweise in der DE 2 919 966 C2 für einen Stirnbrenner und in der DE OS 2 038 529 für einen Innenbrenner beschrieben sind, tritt immer das Problem auf, daß schon mit einem Treibsatz gefüllte Gehäuseteile zum Gehäuse des Raketenmotors verbunden, in der Regel verschweißt, werden müssen. Ein im wesentlichen den Treibsatz aufnehmendes Gehäuseteil hat dabei eine napfähnliche Form mit einem kreiszylindrischen Bereich, der vorne (in Flugrichtung) mit einem gewölbten Deckel verschlossen ist. An der Rückseite ist als Boden in der Regel ein Gußteil eingesetzt, das mit dem den Treibsatz aufnehmenden Gehäuse am äußersten Rand, also der vom Treibsatz am weitesten entfernten Stelle, verschweißt ist.

Es wurde nun gefunden, daß durch Laserschweißen die Verbindungsnaht auch im Bereich des Treibsatzes liegen kann. Gegenstand der Erfindung ist ein Verfahren zum Zusammenbau eines Raketenmotors, das dadurch gekennzeichnet ist, daß das Raketenmotorgehäuse aus wenigstens zwei Teilen, vorzugsweise zwei Hälften, zusammengesetzt wird, die durch eine lasergeschweißte Naht miteinander verbunden werden und daß Laserschweißen im Bereich des Treibsatzes stattfindet.

Bevorzugte Ausführungsformen sind in den Unteransprüchen beschrieben.

Mit einer lasergeschweißten Naht, mit der ein aus wenigstens zwei Teilen zusammengesetztes Gehäuse verbindbar ist und die praktisch an jeder Stelle des schon mit dem Treibsatz gefüllten Gehäuses liegen kann, sind mehrere Vorteile verbunden.

Die Baulänge, d.h. die Abmessung in Flugrichtung, des Raketenmotors läßt sich verkleinern. Die Bearbeitung der Gehäuseteile ist auf ein Minimum reduziert. Die Gehäuseteile sind vorzugsweise Feingußteile; sie können auch als Schmiedeteile ausgeführt sein. Der Zusammenbau eines Raketenmotors ist vereinfacht: der letzte Schritt ist eine Verbindung von "fertigen" Gehäuseteilen durch eine Schweißnaht, wobei dank der Laserschweißtechnik mit Sicherheit vermieden werden kann, daß der Treibsatz initiiert wird.

Folgende Maßnahmen bewirken jede für sich noch eine weitere Steigerung der Sicherheit beim Schweißen:
1. Die Gehäuseteile haben eine solche Wanddicke, daß ein Durchschweißen aus Festigkeitsgründen nicht unbedingt erforderlich ist.
2. Die Schweißnahtvorbereitung wird so ausgeführt, daß im Schweißspalt kein Durchhang der Wurzel möglich ist.
3. Der Bereich unter der Naht im Gehäuseinneren kann mit Isoliermaterial (z. B. PE- oder PU-Schaum) abgedeckt sein.

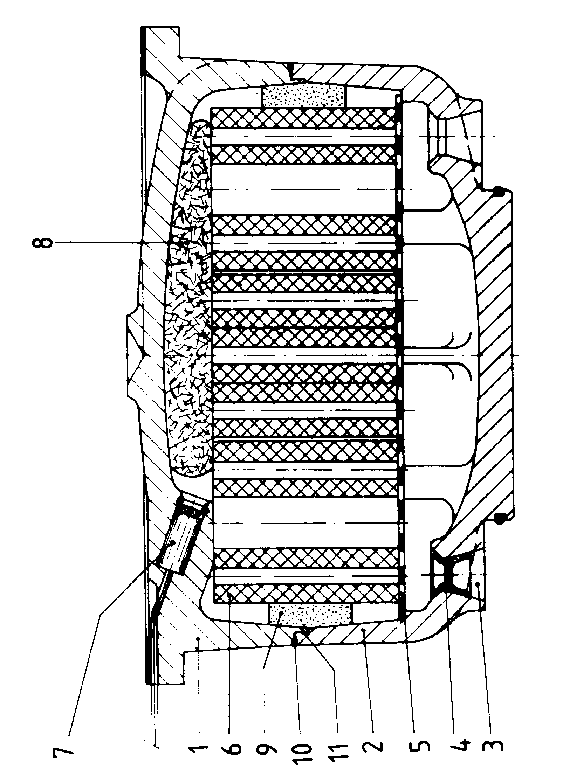

Das in der Zeichnung im Schnitt dargestellte Ausführungsbeispiel eines erfindungsgemäßen Raketenmotors ist im folgenden weiter erläutert.

Das Raketenmotorgehäuse besteht hier aus zwei Feingußhälften, der (in Flugrichtung gesehen) vorderen Hälfte 1 und der hinteren Hälfte 2. Der Werkstoff ist ein Chrom-Nickel-Stahl. In der hinteren Hälfte 2 sind Düsen 3 mit angegossen. Die Düsen 3 sind zunächst mit Verdämmstopfen 4 verschlossen. Auf einer Lochscheibe 5 stützt sich ein Treibsatz 6 in Form eines Röhrenbrenners ab. Es leuchtet unmittelbar ein, daß der Aufbau auch für einen Stirn- oder Innenbrenner in gleicher Weise geeignet ist. Der Treibsatz 6 wird von der Anzündladung 7 initiiert. Mit Füllmaterial 8 aus Glasfasern wird der Treibsatz 6 in axialer Richtung gedämpft und fixiert; in radialer Richtung sorgt ebenfalls ein Ring 9 für Dämpfung und Zentrierung. Darüber hinaus hat dieser Ring 9 aber noch die Funktion, den Treibsatz 6 beim Schweißen der Naht 10 vor zu starker Wärmeeinbringung zu schützen. In diesem Beispiel sind die beiden Gehäusehälften 1, 2 nur etwa zur Hälfte der Wanddicke durch eine Schweißung verbunden, was für die Festigkeit vollkommen ausreicht. In der Verbindungsfläche zwischen den beiden Hälften 1, 2 ist eine Stufe 11 vorhanden, die dazu beiträgt, daß kein Schweißgut von der Naht als Wurzeldurchhang in das Gehäuseinnere dringen kann.

## Patentansprüche

1. Verfahren zum Zusammenbau eines Raketenmotors mit einem zylinderähnlichen Gehäuse als Behälter für einen Feststofftreibsatz (6) und wenigstens einer Düse (3) im Bodenbereich, **dadurch gekennzeichnet,** daß das Raketenmotorgehäuse aus wenigstens zwei Teilen, vorzugsweise zwei Hälften (1, 2), zusammengesetzt wird, die durch eine lasergeschweißte Naht (10) verbunden werden und daß das Laserschweißen im Bereich des Treibsatzes stattfindet.

2. Verfahren nach Anspruch 1, **dadurch gekennzeichnet**, daß die lasergeschweißte Naht (10) eine Rundnaht im mittleren Zylindermantelbereich des Gehäuses ist.

3. Verfahren nach Anspruch 1 oder 2, **dadurch gekennzeichnet**, daß für die lasergeschweißte Naht (10) schräge oder gestufte (11) Fasen an den Teilen (1, 2) vorgesehen sind und die Naht (10) nicht durchgeschweißt ist.

4. Verfahren nach einem der Ansprüche 1 bis 3, **dadurch** **gekennzeichnet**, daß unter der lasergeschweißten Naht (10) zum Treibsatz (6) hin Isoliermaterial (9) angebracht ist.

## Claims

1. Method for the assembly of a rocket motor with a cylinder-like housing as container for a solid propellent charge (6) and at least one nozzle (3) in the base region, characterised in that the rocket motor housing is composed of at least two parts, preferably two halves (1, 2), which are connected by means of a laser-welded seam (10) and that the laser welding takes place in the region of the propellent charge.

2. Method according to claim 1, characterised in that the laser-welded seam (10) is a round seam in the central region of the cylindrical casing of the housing.

3. Method according to claim 1 or 2, characterised in that, for forming the laser-welded seam (10), inclined or stepped (11) lands are provided on the parts (1, 2), and the seam (10) is not welded through.

4. Method according to one of claims 1 to 3, characterised in that insulating material (9) is applied below the laser welded seam (10) up to the propellant charge (6).

## Revendications

1. Procédé d'assemblage d'un moteur-fusée comportant une enveloppe sensiblement cylindrique comme conteneur pour une charge propulsive (6) et au moins une buse (3) située dans la région du fond, caractérisé par le fait que l'enveloppe du moteur-fusée est formée d'au moins deux parties, de préférence deux moitiés (1, 2) qui sont liées par un cordon de soudure (10) réalisé par soudage au laser et par le fait que le soudage au laser est réalisé dans la zone de la charge propulsive.

2. Procédé selon la revendication 1, caractérisé par le fait que le cordon de soudure (10) réalisé par soudage au laser est un cordon circulaire dans la région médiane de l'enveloppe cylindrique.

3. Procédé selon la revendication 1 ou 2, caractérisé par le fait qu'il est prévu pour le cordon de soudure (10) réalisé par soudage au laser des surfaces inclinées ou en gradins (11) sur les parties (1, 2) et que le cordon de soudure (10) n'est pas traversant.

4. Procédé selon l'une des revendications 1 à 3, caractérisé par le fait qu'un matériau isolant (9) est placé sous le cordon de soudure (10) réalisé par soudage au laser, côté charge propulsive (6).
